# EUROPÄISCHE PATENTSCHRIFT

(11) **EP 3 022 433 B1**
(45) Veröffentlichungstag und Bekanntmachung des Hinweises auf die Patenterteilung: **03.01.2018**
(21) Anmeldenummer: 14722157.6
(22) Anmeldetag: 30.04.2014
(51) Int. Cl.: F02N 11/08

(54) **SCHALTERANORDNUNG IN KRAFTFAHRZEUGBORDNETZ**
SWITCH ARRANGEMENT IN MOTOR VEHICLE ELECTRICAL CIRCUIT
DISPOSITION D'INTERRUPTEUR DANS UN CIRCUIT DE BORD DE VÉHICULE À MOTEUR

(30) Priorität: 15.07.2013 DE 102013011720; 13.08.2013 DE 102013013371
(43) Veröffentlichungstag der Anmeldung: 25.05.2016
(73) Patentinhaber: Auto-Kabel Management GmbH, 79688 Hausen i.W. (DE)
(72) Erfinder: BETSCHER, Simon, 41515 Grevenbroich (DE); TAZARINE, Wacim, 41239 Mönchengladbach (DE); GRONWALD, Frank, 50181 Bedburg (DE)
(74) Vertreter: Cohausz & Florack
(86) Internationale Anmeldenummer: PCT/EP2014/058813
(87) Internationale Veröffentlichungsnummer: WO 2015/007410

(56) Entgegenhaltungen:
- EP-A1- 1 677 327
- EP-A2- 0 987 146
- WO-A1-2014/064148
- DE-A1- 10 210 537
- DE-A1-102008 032 138
- US-A- 5 175 484

## Beschreibung

Der Gegenstand betrifft ein Schaltersystem für Kraftfahrzeuge als auch ein Verfahren zum Ansteuern eines solchen Schaltersystems.

Verbrennungsmotoren in Kraftfahrzeugen bieten im Stillstand kein Drehmoment. Aus diesem Grunde können solche Verbrennungsmotoren bis zum heutigen Tage nicht selbstständig durch Einspritzen von Kraftstoff gestartet werden. Dies bedingt, dass der Verbrennungsmotor bzw. die Brennkraftmaschine innerhalb des Fahrzeugs mit einem Drehmoment beaufschlagt werden muss, um zu starten. Dieses Drehmoment wird in der Regel durch einen Starter bzw. eine elektrische Maschine zur Verfügung gestellt. Eine solche elektrische Maschine ist zum Starten bzw. Anlassen des Verbrennungsmotors notwendig.

Der Starter des Verbrennungsmotors wird von der Batterie des Kraftfahrzeugs gespeist. Im Moment des Startens, d.h. zum Anlaufen des Starters, ist dessen induktive Last niederohmig und ein sehr hoher Strom fließt von der Batterie über den Starter. Die Induktivität des Starters stellt im Moment des Startens nahezu einen Kurzschluss dar. Der hierdurch bedingte hohe Stromfluss führt zu Einbrüchen der Batteriespannung an den Batteriepolen. Bei einem typischen Startvorgang eines Fahrzeugs bricht die Batteriespannung nach einer kurzen Zeit unter einen Grenzwert ein. In der Folge kann es daher dazu kommen, dass andere Verbraucher im Bordnetz des Fahrzeugs, welche eine Mindestspannung benötigen, nicht mehr mit ausreichend elektrischer Energie versorgt werden können.

Aus der WO 2014/064148A1 ist ein Schaltersystem für ein Kraftfahrzeugbordnetz bekannt. Dieses umfasst eine Generator-Batterie-Leitung und eine Starter-Batterie-Leitung eines Bordnetzes. Zwischen diesen Leitungen ist ein Schaltelement angeordnet. Dieses Bordnetz verfügt jedoch über eine Mittel zur Begrenzung des Spannungseinbruchs bei einem Startvorgang eines Fahrzeugs mit Verbrennungsmotor.

Der Spannungseinbruch tritt bei allen Fahrzeugen mit Verbrennungsmotor beim Startvorgang auf, wenn der Verbrennungsmotor mittels eines Starters gestartet wird.

Fahrzeuge können beispielsweise Automobile, Schienenfahrzeuge oder Luftfahrzeuge sein. Ferner sind auch Schiffe, Fahrzeuge im Sinne des Gegenstandes.

Um diesen Spannungseinbruch beim Startvorgang, insbesondere im Start-Stopp Betrieb, wie er heute zur Kraftstoffeinsparung üblich geworden ist, zu verhindern, existieren eine Vielzahl von Spannungsstützkonzepten, wie beispielsweise die Verwendung von Stützkondensatoren, die Verwendung von zusätzlichen Batterien als auch der Einsatz von Startstrombegrenzungssystemen.

Ein Startspannungs- bzw. Startstrombegrenzungssystem ist auch bekannt als Startspannungseinbruchsbegrenzer (SEB), Start Current Limiter (SCL), Start Current Control (SCC), Voltage Drop Limiter (VDL) oder dergleichen. Ein solches Startstrombegrenzungssystem begrenzt den Startspannungseinbruch durch Reduzierung des Stroms, der von der Batterie zum Starter fließt. Es werden dabei weiterhin Spannungseinbrüche bis zu einer definierten Untergrenze in Kauf genommen. Außerdem wird eine Startzeitverzögerung in Kauf genommen, da der Starter im Startvorgang nicht die komplette verfügbare elektrische Energie der Batterie zur Verfügung gestellt bekommt, sondern nur eine begrenzte.

Während des Anlassvorgangs mit einer konventionellen Batterie bricht die Batteriespannung nach wenigen Millisekunden unter 8 Volt ein. Dieser anfängliche Spannungseinbruch wirkt auf alle an die Batterie angeschlossenen elektrischen Verbraucher. Der anfängliche Spannungseinbruch, der nur kurzfristig auftritt, könnte beispielsweise durch vorgeschaltete Pufferkondensatoren kompensiert werden. Bei einem herkömmlichen Anlassvorgang erholt sich die Spannung der Batterie unmittelbar nach dem Starten kurzzeitig auf über 9 Volt, um dann jedoch erneut unter 9 Volt einzubrechen. Dieser zweite Spannungseinbruch kann durch herkömmliche Pufferkondensatoren nicht aufgefangen werden, da deren Kapazität lediglich zur Kompensation des ersten Spannungseinbruchs ausreicht. Die Pufferkondensatoren sind regelmäßig nach dem ersten Spannungseinbruch entladen und der zweite Spannungseinbruch während eines Startvorgangs führt zu Problemen innerhalb des Bordnetzes. Insbesondere Motorsteuergeräte als auch Airbagsteuergeräte sowie sonstige Steuergeräte können kurzfristig ausfallen, da nicht jedes Steuergerät auf ein solch niedriges Spannungsniveau von unter 9 Volt ausgelegt ist.

Startstrombegrenzungssysteme sind in der Regel zwischen der Batterie und dem Starter angeordnet. Herkömmliche Bordnetztopologien beinhalten eine Batterie, einen Starter, einen Generator sowie zumindest ein Verbrauchernetzwerk. Je nach Konzept werden der Starter und der Generator mit jeweils einer getrennten Leitung versorgt. Dies führt aber zu einem erhöhten Leitungsgewicht, da zwei Leitungen von der Batterie bis zum Starter bzw. Generator geführt werden, obwohl in der Regel Starter und Generator in räumlicher Nähe zueinander angeordnet sind, insbesondere im Motorraum.

Aus diesem Grunde lag dem Gegenstand die Aufgabe zugrunde, ein effizientes Schaltersystem zur Verfügung zu stellen, welches sich besonders einfach in die Bordnetztypologie einfügen lässt und gleichzeitig eine Gewichtseinsparung mit sich bringt.

Diese Aufgabe wird durch ein Schaltersystem nach Anspruch 1 gelöst.

Es ist erkannt worden, dass die Leitungstypologie in Kraftfahrzeugen betreffend die Generator-Batterie-Leitung bzw. die Starter-Batterie-Leitung in vorteilhafter Weise genutzt werden kann, um eine Startstromeinschaltbegrenzung realisieren zu können. In der Regel sind der Starter als auch der Generator im Motorraum angeordnet. Sie sind in räumlicher Nähe zueinander. Die Batterie ist entweder im Motorraum oder im Kofferraum bzw. Unterboden eines Fahrzeugs angeordnet und dabei räumlich weiter von Starter bzw. Generator entfernt, als diese untereinander. Dadurch, dass sowohl Starter-Batterie-Leitung als auch Generator-Batterie-Leitung von der Batterie zum Starter bzw. Generator geführt werden muss, entsteht ein doppelter Verkabelungsaufwand. Dieser doppelte Verkabelungsaufwand kann gegenständlich dazu genutzt werden, einen Leitungswiderstand zwischen Starter und Batterie bzw.

Generator und Batterie zu variieren. Dies wird dadurch realisiert, dass die Starter-Batterie-Leitung und die Generator-Batterie-Leitung räumlich im Bereich des Starters kurzschließbar ist. Durch das Kurzschließen der beiden Leitungen wird der Gesamtleitungsquerschnitt zwischen dem Punkt des Kurzschlusses und der Batterie vergrößert, insbesondere nahezu verdoppelt. Dies kann für die verschiedensten Zwecke sinnvoll sein.

Im Normalbetrieb des Fahrzeugs wird die Batterie über den Generator geladen. Es fließt ein Ladestrom üblicherweise über die Generator-Batterie-Leitung vom Generator zur Batterie. Wird das erste Schalterelement kurzgeschlossen, kann der Ladestrom zusätzlich über die Starter-Batterie-Leitung zu der Batterie fließen und die Leitungen werden weniger stark beansprucht. Es kommt zu einer geringeren Wärmeentwicklung auf den beiden Leitungen. Die Verlustleistung ist dadurch ebenfalls verringert.

Darüber hinaus ist es möglich, dass im Moment des Startens, insbesondere im Moment eines Warmstarts, zunächst nur die Starter-Batterie-Leitung genutzt wird. Diese Leitung hat einen ersten Leitungswiderstand. Aufgrund des Leitungswiderstands ist der Strom, der im Startfall von der Batterie zum Starter fließt begrenzt. Kurz nach dem Start, beispielsweise nach wenigen Millisekunden, insbesondere wenigen 100 Millisekunden kann das erste Schalterelement geschlossen werden. Der Starterstrom kann dann sowohl über die Starter-Batterie-Leitung als auch die Generator-Batterie-Leitung fließen. Der Gesamtleitungswiderstand ist aufgrund der Parallelschaltung der beiden Leitungen verringert. Der Starterstrom ist nun erhöht, da ein geringerer Leitungswiderstand zwischen Batterie und Starter vorliegt. Dieser kann so dimensioniert werden, so dass ein ausreichend hoher Starterstrom fließen kann.

Wie bereits erläutert, sind sowohl der Starter als auch der Generator vorzugsweise im Motorraum eines Fahrzeugs angeordnet. Das erste Schalterelement ist somit gemäß einem vorteilhaften Ausführungsbeispiel ebenfalls im Motorraum des Fahrzeugs angeordnet. Dies bedeutet, dass das erste Schalterelement in räumlicher Nähe zum Generator als auch zum Starter angeordnet ist. Insbesondere eine räumliche Nähe zum Starter ist vorteilhaft.

Eine optimierte Startstromeinschaltbegrenzung ist dann möglich, wenn das erste Schalterelement gemäß einem Ausführungsbeispiel an einer Querschnittsverjüngung der Starter-Batterie-Leitung angeordnet ist. Die Starter-Batterie-Leitung kann aus zumindest zwei Leitungsquerschnitten gebildet sein. Insbesondere kann der Leitungsquerschnitt zwischen dem Anschluss des ersten Schalterelements und der Batterie bzw. einem Ausgang des Schalternetzwerks geringer als der Leitungsquerschnitt zwischen dem Anschluss des ersten Schalterelements und dem Starter. Im Moment des Startens fließt, wie oben erwähnt, bei entsprechender Steuerung des ersten Schalterelements, der Starterstrom zunächst lediglich über die Starter-Batterie-Leitung. Aufgrund des verringerten Leiterquerschnitts im Bereich der Starter-Batterie-Leitung ist der Gesamtstrom begrenzt, da der Leitungswiderstand erhöht ist. Zusätzlich ist das zweite Schalterelement während des Starts geschlossen und das dritte Schalterelement kann darüber hinaus auch geschlossen sein.

Diese Begrenzung kann so dimensioniert werden, dass die Batteriespannung nicht unter einen Pegel von beispielsweise 9 Volt fällt. Der untere Pegel der Batteriespannung ist abhängig von den Steuergeräten und Verbrauchern innerhalb der Bordnetztopologie. Je nachdem, für welche untere Spannungsgrenze die Steuergeräte bzw. Verbraucher ausgelegt sind, kann die Startstromeinschaltbegrenzung dimensioniert werden. Dies kann eine untere Spannungsgrenze von 9 Volt sein, jedoch auch in anderen Bordnetzen, die nicht auf einer 12 Volt Batterie beruhen, andere Werte betragen.

Durch das Schließen des ersten Schalterelements wird der Bereich der Querschnittsverjüngung der Starter-Batterie-Leitung über die Generator-Batterie-Leitung kurzgeschlossen und der Batteriestrom kann über beide Leitungen von der Batterie zum Starter fließen.

Die Querschnittsverjüngung ist gemäß einem Ausführungsbeispiel derart, dass die Leitung zwischen dem ersten Schalterelement und dem Starter einen größeren Querschnitt hat als die Leitung zwischen dem ersten Schalterelement und der Batterie bzw. einem Ausgang des Schalternetzwerks. Insbesondere ist das erste Schalterelement elektrisch unmittelbar im Bereich der Querschnittsverjüngung angeordnet. Die Querschnittsverjüngung kann beispielsweise im Bereich einer stoffschlüssigen Verbindung zweier Teilleiter vorgesehen sein, wobei die Starter-Batterie-Leitung aus zumindest diesen beiden Teilleitern gebildet ist. Insbesondere kann das erste Schalterelement an einem Stützpunkt, der an der Starter-Batterie-Leitung angeordnet ist, angebracht sein. Es ist auch, wie bereits beschrieben möglich, keine querschnittsverjüngte Starter-Batterie-Leitung zu implementieren. Dadurch fiele die Spannungseinbruchsbegrenzung weg, das erste Schalterelement behielte aber seine Funktion.

Gemäß einem Ausführungsbeispiel ist die Querschnittsverjüngung zumindest eine Halbierung des Leiterquerschnitts. Auch ist es möglich, dass der Leiterquerschnitt im Wesentlichen auf ca, ein Viertel bis ein Drittel reduziert wird. Insbesondere ist eine Querschnittsverjüngung von 85 mm² auf 25 mm² möglich. Andere Werte sind jedoch auch sinnvoll und möglich.

Der Starterstrom fließt nach dem Schließen des ersten Schalterelements sowohl über die Starter-Batterie-Leitung als auch über die Generator-Batterie-Leitung. Dieser Strom muss auch von dem Teil der Starter-Batterie Leitung getragen werden können, welcher zwischen dem ersten Schalterelement und dem Starter liegt. Somit ist der Leitungswiderstand in diesem Teilbereich der Starter-Batterie-Leitung möglichst gering zu wählen, also der Leitungsquerschnitt ggf. möglichst groß. Außerdem ist die Stromtragfähigkeit dieses Teilbereichs höher auszulegen, als die Stromtragfähigkeit des ersten Teilbereichs der Starter-Batterie-Leitung. Um den Leitungswiderstand möglichst gering zu halten, wird vorgeschlagen, dass das erste Schalterelement derart an der Starter-Batterie-Leitung angeschlossen ist, dass die Leitungslänge zwischen dem ersten Schalterelement und dem Starter geringer ist als zwischen dem ersten Schalterelement und der Batterie bzw. einem Ausgang des Schalternetzwerks.

Im Betrieb fließt Generatorstrom vom Generator zur Batterie. Die Leitungsverluste müssen möglichst gering sein. Dies bedeutet, dass möglichst große Leitungsquerschnitte gewählt werden. Um dies zu gewährleisten, wird das erste Schalterelement im Betrieb geschlossen, so dass der Generatorstrom ab dem Anschlusspunkt des Schalterelements über sowohl die Starter-Batterie-Leitung als auch die Generator-Batterie-Leitung zur Batterie fließen kann.

Um die Leitungsverluste auf dem ersten Teilleiter der Generator-Batterie-Leitung so gering wie möglich zu halten, wird vorgeschlagen, dass das erste Schalterelement derart an der Generator-Batterie-Leitung angeschlossen ist, dass die Leitungslänge zwischen dem ersten Schalterelement und dem Generator geringer ist als zwischen dem ersten Schalterelement und der Batterie.

Die Batterie kann mit einem ihrer Pole an einer Parallelschaltung aus dem ersten Schalterelement und einem Schalternetzwerk gebildet sein. Das Schalternetzwerk kann an einem Eingang mit dem Batteriepol, insbesondere dem Batteriepluspol verbunden sein. Ausgangsseitig kann das Schalternetzwerk einerseits mit einem ersten Ausgang mit der Generator-Batterie-Leitung verbunden sein und mit einem zweiten Ausgang mit der Starter-Batterie-Leitung. Jeweils ein Schalterelement kann in dem Schalternetzwerk vorgesehen sein, um die Batterie bzw. den Batteriepol jeweils mit der Generator-Batterie-Leitung bzw. der Starter-Batterie-Leitung verbinden zu können.

Wie bereits erwähnt, kann das Schalternetzwerk einen Eingang aufweisen. An diesen Eingang, der auch aus zwei Anschlusspunkten gebildet sein kann, die miteinander kurzgeschlossen sind, kann der Batteriepol angeschlossen sein. In dem Schalternetzwerk kann ein zweites Schalterelement in der Starter-Batterie-Leitung angeordnet sein und ein drittes Schalterelement in der Generator-Batterie-Leitung.

Die Schalterelemente ermöglichen es, die jeweilige Leitung von der Batterie zu trennen. Insbesondere bei Fahrzeugstillstand ist es möglich, den Batteriepol vom Bordnetz im Bereich der Starter-Batterie-Leitung bzw. Generator-Batterie-Leitung zu trennen.

Jedes der Schalterelemente hat einen, wenn auch geringen Übergangswiderstand und stellt einen ohmschen Widerstand in der Verbindung zwischen der Batterie und dem Generator bzw. Starter dar. Um die Verlustleitung im Schalternetzwerk gering zu halten ist es bevorzugt, wenn die Schalterelemente einen Widerstand von weniger als 10 mOhm, vorzugsweise weniger als 1 mOhm, besonders bevorzugt weniger als 0,1 mOhm aufweisen. Ferner sind die Anschlüsse und Leitungen des Schalternetzwerks bevorzugt so ausgestaltet, dass zwischen dem Eingang und jeweils einem Ausgang des Schalternetzwerks ein Widerstand von weniger als 10 mOhm, vorzugsweise weniger als 1 mOhm, besonders bevorzugt weniger als 0,1 mOhm anliegt.

Durch eine geeignete Verschaltung der Schalterelemente ist es möglich, zum einen eine Stromlosschaltung der Batterieleitungen (Starter-Batterie- / Generator-Batterie-Leitung) im Crashfall zu gewährleisten. Andererseits kann, unter anderem durch das erste Schalterelement die Starter-Batterie-Leitung zum Laden der Batterie genutzt werden. Zusätzlich könnte über eine zumindest in Teilen querschnittsverjüngte Starter-Batterie-Leitung eine Startstromeinschaltbegrenzung realisiert werden.

Das Schaltersystem lässt sich nicht nur in Automobilen wie Pkw und Lkw mit Verbrennungsmotoren, sondern auch in Schienenfahrzeugen, Luftfahrzeugen, Schiffen oder dergleichen, ob nun rein elektrisch betrieben oder mit einem Verbrennungsmotor einsetzen.

Das Schalternetzwerk ist vorzugsweise in der Nähe der elektrischen Batterie, insbesondere der Fahrzeugbatterie, insbesondere der Starterbatterie des Kraftfahrzeugs angeordnet. Es ist in der Regel eine 12, 24 oder 48 Volt Batterie.

Um die elektrische Verlustleistung zwischen dem Schalternetzwerk und dem Batteriepol möglichst gering zu halten, wird vorgeschlagen, dass der Eingang mit einem Batteriepluspol im Wesentlichen kurzschließbar ist. Für den Fall, dass das Schalternetzwerk mit dem Batteriepluspol verbunden ist, ist es möglich, mittels des Schalternetzwerks die Batterieleitungen zum Generator als auch zum Starter stromlos zu schalten. Vorzugsweise ist eine möglichst enge Kopplung des Schalternetzwerks mit dem Batteriepluspol anzustreben, um zu verhindern, dass auf der elektrischen Leitung zwischen dem Schalternetzwerk und dem Batteriepluspol ein Kurzschluss mit der Karosse bzw. dem Batterieminuspol entstehen kann. Kriechströme und Verlustleistung können durch das stromlos Schalten bei Fahrzeugstillstand unterbunden werden. Insbesondere können Verbraucher, die in dem Zweig der Generator-Batterie-Leitung angeordnet sind, ebenfalls stromlos geschaltet werden.

Eine besonders einfache Installation in einem Kraftfahrzeugnetz lässt sich dann realisieren, wenn das Schalternetzwerk in einem Gehäuse gekapselt ist. In dem Gehäuse sind die Schalterelemente vorgesehen und aus dem Gehäuse ragen vorzugsweise lediglich die beiden Ausgänge als auch der Eingang als elektrische Kontaktelemente heraus. Auch ist es möglich, dass eine Signalleitung in das Gehäuse hinein führt oder dass an dem Gehäuse nach außen ragende Signalanschlüsse vorhanden sind.

Um die verschiedenen Funktionalitäten gewährleisten zu können, ist es möglich, dass die einzelnen Schalterelemente getrennt ansteuerbar sind. Vorzugsweise ist jedes einzelne Schalterelement getrennt ansteuerbar. Durch Ansteuern des ersten Schalterelements ist es möglich, die beiden Leitungen miteinander im Bereich der des ersten Schalterelements bzw. der Verbindungsleitung zwischen der Generator-Batterie-Leitung und der der Starter-Batterie-Leiter kurz zu schließen.

Über das dritte Schalterelement ist es möglich, den ersten Ausgang mit dem Eingang kurzzuschließen. Dadurch ist es beispielsweise möglich, den Batteriepol mit der Generator-Batterie-Leitung kurzzuschließen. Insbesondere den Batteriepluspol. Das zweite Schalterelement ermöglicht ein Kurzschließen zwischen dem Eingang und dem zweiten Ausgang. Dadurch ist es beispielsweise möglich, den Batteriepol mit der Starter-Batterie-Leitung kurzzuschließen.

Das Öffnen und Schließen der Schalterelemente erfolgt über einen entsprechenden Steuerimpuls von einem Steuergerät. Das Steuergerät ist vorzugsweise außerhalb des des Gehäuses angeordnet. Auch ist es möglich, dass das Steuergerät Teil des Schalternetzwerks ist. Dabei kann das Steuergerät in dem Gehäuse angeordnet sein. Das Steuergerät kann als Teil eines Schalterelements gebildet sein. Das Steuergerät kann in einem als sogenannten "Master" fungierenden Schalterelement angeordnet sein. Dann können die jeweils anderen Schalterelemente als sogenannte "Slaves" dieses "Masters" fungieren.

Um das Schalten von außerhalb des Gehäuses zu ermöglichen, wird vorgeschlagen, dass eine vorzugsweise mehradrige Steuerleitung zum Schalten der Schalterelemente in das Gehäuse geführt ist. Somit können von außen Steuerimpulse generiert werden, die zum Schalten der Schalterelemente innerhalb des Gehäuses genutzt werden. Dies birgt größtmögliche Flexibilität hinsichtlich der Anordnung des Steuergerätes und ermöglicht eine Miniaturisierung des Gehäuses selbst.

Zum einen platzsparend und zum anderen elektrisch günstig lässt sich das Gehäuse des Schalternetzwerks in einer Polnische einer Fahrzeugbatterie anordnen. Dann ist der Eingang unmittelbar an dem Battierpol, vorzugsweise dem Batteriepluspol. Es ist möglich, dass das Gehäuse als Teil einer Batterieklemme gebildet ist. Andererseits ist die Polnische ohnehin vorhanden und das Anordnen des Gehäuses in der Polnische führt zu einem minimalen Platzverbrauch. Die Fahrzeugtopologie muss dann nicht verändert werden.

Eine Batterie ist regelmäßig mit einer genormten Polnische versehen. Insbesondere die DIN-Normen DIN EN 50342-2 sowie DIN 72311 geben Normmaße für die Polnische sowie einen zwischen den Polnischen verlaufenden Gehäuseversatz der Batterie an. Die Polnische ist dabei der Bereich, der den Batteriepol aufweist und durch Seitenwände der Batterie einerseits und Außenkanten der Batterie andererseits begrenzt ist. Vorzugsweise weist die Polnische ein maximales Maß von 60 mm an 72,5 mm auf. Die Höhe der Polnische ist regelmäßig zwischen 30 und 40 mm, vorzugsweise unterhalb von 35 mm. Innerhalb dieses Bauraums, vorzugsweise unter Verwendung des zwischen den Polnischen verlaufenden länglichen Versatzes kann das Schalternetzwerk angeordnet sein. Es versteht sich, dass die räumliche Anordnung des Schalternetzwerks innerhalb der Polnische so verstanden werden kann, dass hiermit gemeint ist, dass die Baugruppe größtenteils hierin angeordnet sind. Sollte die Baugruppen teilweise außerhalb der Polnische liegen, jedoch weiterhin größtenteils innerhalb der Polnische, so ist dies von der Bedeutung des Begriffs räumlich innerhalb der Polnische umfasst.

Die Schalterelemente können aus Parallelschaltungen von einzelnen Schaltern, die wiederum einzelne Schalter aufweisen und parallel geschaltet sein können, gebildet sein. Auch ist es möglich, dass in den Schalterelementen antiserielle Schalter, beispielsweise in Form von gegenläufig geschalteten Transistoren vorgesehen sind. Somit können die Schalterelemente unidirektional als auch bidirektional Strom schalten. Vorzugsweise können auch Dioden in den Schalterelementen vorgesehen sein, um die Stromflussrichtung beispielsweise in nur eine Richtung zu ermöglichen. Beispielsweise können solche Dioden zumindestens die jeweiligen intrinsischen Dioden (Bodydioden), welche in den Halbleitern ohnehin vorhanden sind. Zusätzlich kann zur Entlastung der Halbleiter eine Freilaufdiode vorzugsweise als neues, weiteres Bauteil eingesetzt werden.

Gemäß einem Ausführungsbeispiel wird vorgeschlagen, dass ein Schalterelement zumindest einen elektronischen Schalter aufweist. Ein elektronischer Schalter kann beispielsweise als Halbleiterschalter gebildet sein. Dies kann beispielsweise ein Transistorschalter, ein MOSFET-Schalter, ein IGBT-Schalter oder dergleichen sein.

Auch elektrische Schalter, wie beispielsweise Schütze oder Relais können vorgesehen sein.

Die Schalterelemente können aus einer Parallelschaltung von jeweils zumindest einer Diode und einem Schalter gebildet sein. Vorzugsweise weisen die zweiten und dritten Schalterelemente jeweils zumindest eine Diode auf, deren Durchgangsrichtung in Richtung der Batterie weist. Das erste Schalterelement kann eine Parallelschaltung von zumindest einer Diode und einem Schalter aufweisen. Die Durchgangsrichtung dieser Diode kann von der Starter-Batterie-Leitung bzw. dem zweiten Ausgang in Richtung der Generator-Batterie-Leitung bzw. dem ersten Ausgang weisen.

Durch diese Diode des ersten Schalters kann verhindert werden, dass während der erste Schalter geöffnet ist, der Strom von der Generator-Batterie-Leitung zur Starter-Batterie-Leitung und/oder zum Starter fließen.

Wie zuvor angedeutet, können die Schalterelemente aus einer Mehrzahl von Schaltern gebildet sein. Daher wird auch vorgeschlagen, dass ein Schalterelement aus einer Parallelschaltung von zumindest zwei getrennt schaltbaren Schaltern gebildet ist. Insbesondere ist eine hohe Stromtragfähigkeit und/oder ein geringer Übergangswiderstand notwendig, um eine Starter-Batterie-Leitung bzw. eine Generator-Batterie-Leitung sinnvoll zu betreiben. Im Fall des Startens einer Verbrennungsmaschine fließt in der Regel von der Batterie ein Strom von mehreren 100 Ampere zum Starter. Halbleiterschalter müssen für solch hohe Ströme ausgelegt sein und die Verlustleistung über diese Schalter sollte möglichst gering sein. Es kann günstiger sein, mehrere Halbleiter parallel zu schalten um den gewünschten Übergangswiderstand durch die Parallelschaltung der einzelnen Halbleiterschalter in Summe zur Verfügung zu stellen. Auch kann durch ein Parallelschalten von mehreren Halbleiterschaltern der Ausfall eines einzelnen Halbleiterschalters gegebenenfalls kompensiert werden. Darüber hinaus kann durch kaskadiertes Schalten von Halbleiterschaltern innerhalb eines Schalterelements der Übergangswiderstand des Schalterelements variiert werden, was insbesondere bei der Startstromeinschaltbegrenzung relevant sein kann. So können beispielsweise zu Beginn nur wenige Halbleiterschalter innerhalb eines Schaltelements geschlossen werden und nach und nach Halbleiterschalter zugeschaltet werden.

Dabei ist es insbesondere möglich, im Moment einer Vorstartphase, also bevor der Starter überhaupt mit Strom beaufschlagt wird, den Pufferkondensator, der regelmäßig an der Generator-Batterie-Leitung angeschlossen ist, zu laden. Hierzu kann z.B. während des Vorstarts das dritte Schalterelement geschlossen werden oder das zweite und erste Schalterelement geschlossen werden, um den Kondensator zu laden. Um einen möglichst gleichmäßigen Ladestrom zu erhalten, kann das dritte oder das zweite und oder erste Schalterelement auch gepulst geschlossen und geöffnet werden. Somit kann der Ladestrom beeinflusst werden und der Kondensator möglichst schonend geladen werden. Nach dem Vorstart kann durch zunächst Schließen des zweiten Schalterelements, ggf. auch gepulst, der Startstrom für den Starter geschaltet werden. In einer zweiten Startphase kann das erste Schalterelement geschlossen werden, um den Leitungswiderstand zwischen Batterie und Starter zu verringern.

Auch ist es möglich, den Strom zwischen Batterie, Starter und Verbrauchern gepulst schaltbar zu machen. Durch ein gepulstes Schalten der Schalterelemente kann ein mittlerer Widerstandswert eingestellt werden, was auch für die Stromeinschaltbegrenzung relevant sein kann.

Das Schaltersystem kann eine Generator-Batterie-Leitung als auch eine Starter-Batterie-Leitung aufweisen. Der Batteriepol ist über die Batterieleitung mit dem Eingang des Schalternetzwerks verbunden. Der erste Ausgang des Schalternetzwerks ist mit der Generator-Batterie-Leitung verbunden und der zweite Ausgang des Schalternetzwerks mit dem ersten Teil der Starter-Batterie-Leitung. Im Bereich des Starters und des Generators, insbesondere im Motorraum, z.B. in der Batteriewanne oder in einem Vorstromverteiler, ist das erste Schalterelement angeordnet. Das erste Schalterelement verbindet die Starter-Batterie-Leitung mit der Generator-Batterie-Leitung vorzugsweise unter Verwendung zumindest einer Generator-Starter-Verbindungsleitung, insbesondere durch direkte Kontaktierung des ersten Schalterelements auf die Starter-Batterie-Leitung und der Generator-Batterie-Leitung. Im Bereich der Querschnittsveränderung der Starter-Batterie-Leitung ist das erste Schalterelement angeschlossen, welches mit der Generator-Batterie-Leitung verbunden ist. Das System stellt eine zwischen Batterie und Starter bzw. Generator angeordnete Schaltfunktionalität zur Verfügung.

Bei dem gegenständlichen System ist das Schalternetzwerk vorzugsweise in räumlicher Nähe zu der Batterie angeordnet, insbesondere in einem Abstand von weniger als 50 cm. Für eine besonders geringe Verlustleistung auf der Batterieleitung wird eine Leitungslänge zwischen einem Batteriepol und dem Eingang von weniger als 50 cm vorgeschlagen. Außerdem ist die Kurzschlussanfälligkeit für die Leitungsstrecke zwischen Batteriepol und Eingang möglichst gering zu halten, was unter anderem auch durch eine geringe Leitungslänge realisierbar ist.

Eine bevorzugte Position der Anordnung des Schalternetzwerkes ist eine Batteriewanne oder ein Vorstromverteiler. Darin kann das Schalternetzwerk in unmittelbarer Nähe zu der Batterie angeordnet werden.

In dem System kann eine Steuerschaltung vorgesehen sein, wie sie zuvor beschrieben wurde. Diese ist dazu eingerichtet, die einzelnen Schalterelemente abhängig von Fahrzeugzuständen zu schalten. So kann eine Stromlosschaltung der Starter-Batterie-Leitung und/oder der Generator-Batterie-Leitung erfolgen. So kann beispielsweise Kriechstromkorrosion verringert bzw. vermieden werden, indem bei Stillstand des Fahrzeugs diese Leitungen von dem Batteriepluspol getrennt werden. Außerdem kann durch bedarfsweises parallel Schalten von Teilen der Starter-Batterie-Leitung mit Teilen der Generator-Batterie-Leitung der Leitungswiderstand zwischen Starter bzw. Generator und Batterie variiert werden.

Beispielsweise ist es möglich, dass bei Fahrzeugstillstand zumindest der zweite Schalter, vorzugsweise der zweite Schalter und der dritte Schalter geöffnet werden.

Beim Start, insbesondere beim Warmstart im Start-Stop-Betrieb, ist es häufig notwendig, einen Spannungseinbruch unter 9 Volt zu verhindern. Um dies zu erreichen, muss der Strom von der Batterie zum Starter gesteuert werden. In den ersten einhundert Millisekunden, vorzugsweise in der ersten Sekunde, insbesondere innerhalb der ersten zwei Sekunden des Starts fließt ein sehr hoher Strom von der Batterie zum Starter. Um diesen zu verringern, wird vorgeschlagen, zumindest nur das zweite Schalterelement zu Beginn des Startvorgangs zu schließen. Auch ist es möglich, dass das zweite und das dritte Schalterelement zu Beginn des Starts geschlossen werden. Erst nach Ablauf einer gewissen Startzeit kann das erste Schalterelement hinzugeschaltet werden. Auch ist es möglich, dass das erste, zweite und dritte Schalterelement zu Beginn des Starts geschlossen werden.

Das Öffnen und Schließen der Schalterelemente kann auch abhängig von einem Ladezustand der Batterie (SOC) oder einem Status der Batterie (State-Of-Health) der Batterie erfolgen. So kann z.B. bei einer geringen Batteriespannung, i.e. einen schlechten SOC, ein Spannungseinbruch durch gepulstes Schalten des zweiten Schalterelements berücksichtigt werden. Auch kann das erste Schalterelement ggf. erst später oder auch gepulst eingeschaltet werden, um die Batterie möglichst schonend zu belasten.

Auch der Zustand der Schalterelemente kann durch die Steuerschaltung überwacht werden. Bei Ausfall eines Schalters, insbesondere des zweiten oder dritten Schalters kann durch Schließen des jeweils anderen Schalters und des ersten Schalters der ausgefallene Schalter überbrückt werden und so eine Fehlfunktion verhindert werden.

In der Generator-Batterie-Leitung bzw. in dem Strang, der die Generator-Batterie-Leitung mit dem Schalternetzwerk verbindet, kann ein erster Teil elektrischer Verbraucher des Kraftfahrzeugs angeordnet sein.

Ein zweiter Teil elektrischer Verbraucher kann unmittelbar an dem Batteriepluspol angeschlossen sein, ohne über das Schalternetzwerk abgesichert zu sein. Diese Verbraucher können beispielsweise Verbraucher sein, die sicherheitskritisch sind und bei denen ein Abschalten zwingend vermieden werden muss.

Ein weiterer Gegenstand ist ein Verfahren nach Anspruch 26. Das Schalten der Schalterelemente abhängig von den Fahrzeugzuständen ermöglicht eine adaptive Steuerung des Widerstands zwischen Batterie und Starter bzw. Batterie und Generator und somit einen Einfluss auf den Strom in der Generator-Batterie-Leitung als auch auf der Starter-Batterie-Leitung.

Nachfolgend wird der Gegenstand anhand einer ein Ausführungsbeispiel zeigenden Zeichnung näher erläutert. In der Zeichnung zeigen:
Fig. 1 eine allgemeine Bordnetztopologie mit einem Schalternetzwerk;
Fig. 2 eine detaillierte Bordnetztopologie mit einem Schalternetzwerk;
Fig. 3a eine Schalterstellung in Ruhestellung des Fahrzeugs;
Fig. 3b eine Schalterstellung in eine Vorstartphase des Fahrzeugs;
Fig. 3c eine Schalterstellung in einer ersten Startphase des Fahrzeugs;

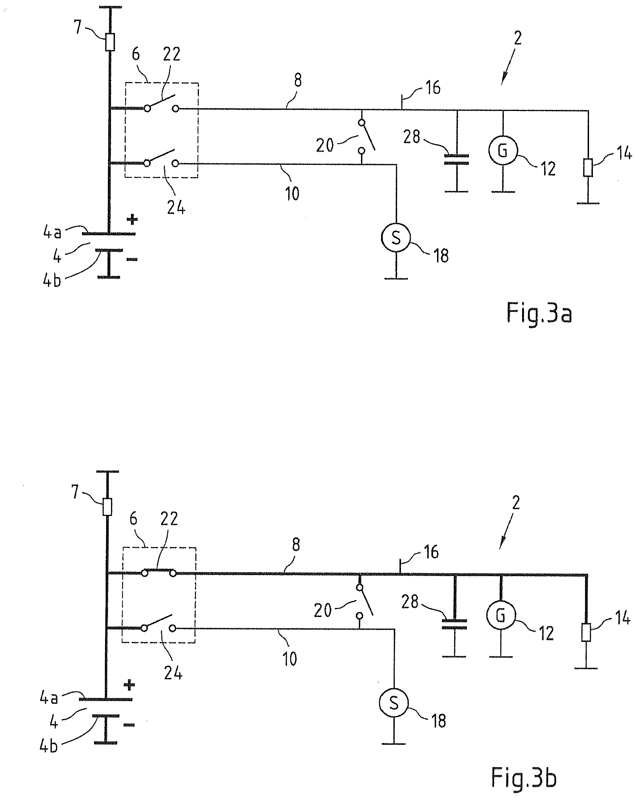

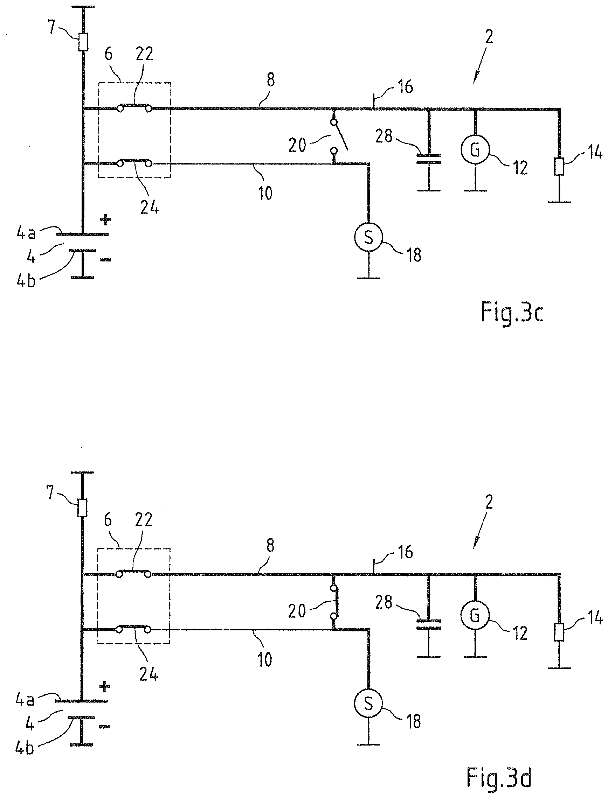

Fig. 3 deine Schalterstellung in einer zweiten Startphase des Fahrzeugs.

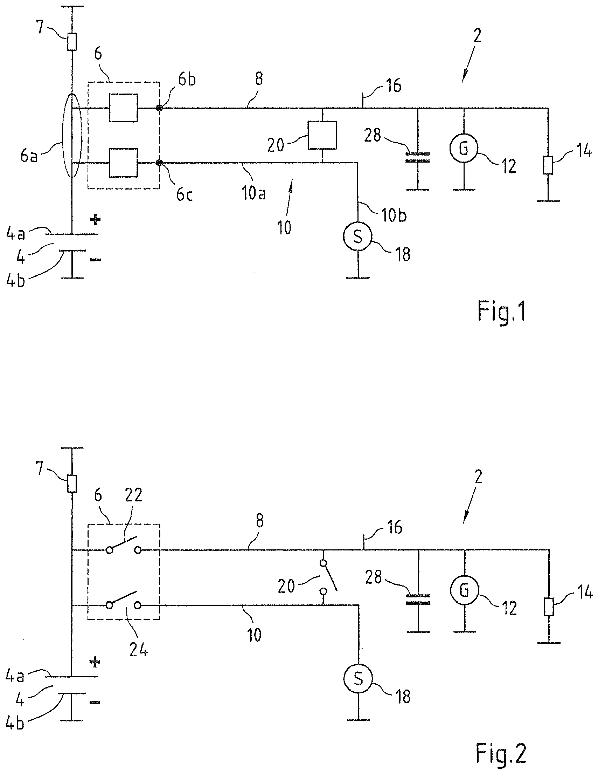

Fig. 1 zeigt eine Bordnetztopologie 2 eines Kraftfahrzeugs. Die Bordnetztopologie weist eine Kraftfahrzeugbatterie 4 mit einem Pluspol 4a und einem Minuspol 4 b auf. Der Minuspol 4b ist regelmäßig mit der Karosse des Kraftfahrzeugs verbunden. Am Pluspol 4a der Batterie 4 ist in unmittelbarer räumlicher als auch elektrischer Nähe ein Schalternetzwerk 6 angeordnet. Das Schalternetzwerk 6 ermöglicht eine flexible Beschaltung von daran angeschlossenen Batterieleitungen, wie z.B. eine Starter-Batterie-Leitung 10 und/oder eine Generator-Batterie-Leitung 8 und insbesondere eine Stromlosschaltung bei einem Unfall bzw. einem Stillstand.

Parallel zu dem Schalternetzwerk 6 ist es möglich, ein Verbrauchernetz, schematisch mit einem Widerstand 7 angedeutet, mit dem Batteriepluspol 4a zu verbinden. Dieses Verbrauchernetz 7 umfasst insbesondere sicherheitskritische Verbraucher, die keinesfalls von der Batterie zu trennen sind.

Das Schalternetzwerk 6 weist einen Eingang 6a sowie einen ersten Ausgang 6b und einen zweiten Ausgang 6c auf.

Der Eingang 6a ist mit dem Batteriepluspol 4a kurzgeschlossen. Der erste Ausgang 6b ist mit einer Generator-Batterie-Leitung 8 verbunden. Der zweite Ausgang 6c ist mit einer Starter-Batterie-Leitung 10 verbunden. Beide Leitungen 8, 10 können als Flachleitungen und oder Rundleitungen, insbesondere als massive Aluminiumleitungen und oder Kupferleitungen geformt sein. Die Generator-Batterie-Leitung 8 ist unmittelbar mit dem Generator 12 verbunden. Außerdem kann dem Strang der Generator-Batterie-Leitung 8 ein weiteres Verbrauchernetzwerk 14 vorgesehen sein. Diese Verbraucher können beispielsweise Komfortverbraucher sein, die im Crashfall als auch beim Stillstand des Fahrzeugs nicht zwingend mit elektrischer Leistung von der Batterie 4 versorgt werden müssen. Ferner kann ein Fremdstartstützpunkt 16 an der Generator-Batterie-Leitung 8 vorgesehen sein.

Parallel zu der Generator-Batterie-Leitung 8 ist die Starter-Batterie-Leitung 10 vorgesehen, die mit dem Starter 18 verbunden ist.

Die Starter-Batterie-Leitung 10 ist vorzugsweise zweiteilig. Ein erster Teil 10a ist zwischen dem Ausgang 6c des Schalternetzwerks 6 und einem ersten Schalterelement 20 angeordnet. Ein zweiter Teil 10b ist zwischen dem ersten Schalterelement 20 und dem Starter 18 angeordnet. Im Bereich des Anschlusses des ersten Schalterelements 20 hat die Starter-Batterie-Leitung 10 eine Querschnittsveränderung. Der erste Teil 10a kann einen geringeren Leiterquerschnitt als der zweite Teil 10b haben. Ein Anschluss für das erste Schalterelement 20 kann als Anschlussbolzen aus der Starter-Batterie-Leitung 10 heraus geführt sein. Die Querschnittsveränderung kann im Bereich einer stoffschlüssigen Verbindung zwischen den beiden Teilen 10a und 10b angeordnet sein. Die beiden Teile 10a, 10b können aus einem gleichen Metall oder aus unterschiedlichen Metallen gebildet sein. So kann der Teil 10b beispielsweise eine höhere Leitfähigkeit haben als der Teil 10a. Vorzugsweise sind die beiden Teile jedoch aus Kupfer, Kupferlegierungen, Aluminium oder Aluminiumlegierungen gebildet. Insbesondere Aluminium 99,5 oder reiner sind geeignet.

Die Masserückführung zum Batterieminuspol 4b erfolgt im gezeigten Fall über die Karosse, kann jedoch auch über eine getrennte Masseleitung erfolgen. Insbesondere in Hochvoltnetzen erfolgt die Masserückleitung über eine separate Leitung.

Das Schalternetzwerk 6 weist, wie es in der Fig. 2 dargestellt ist, zwei Schalterelemente 22 und 24 auf, die jeweils den Batteriepol 4a mit entweder der Leitung 8 oder der Leitung 10 verbinden. Gezeigt ist die räumliche Trennung zwischen dem Schalternetzwerk 6 und dem Schalterelement 20, durch welche die Leitungswiderstände zwischen Starter 18 und Batterie 4 bzw. Generator 12 und Batterie 4 variiert werden können. Die Schalter 22, 24 des Schalternetzwerks 6 können in einem gestrichelt angedeuteten Gehäuse gekapselt sein.

Das Schalternetzwerk 6 ist vorzugsweise in räumlicher Nähe zu der Batterie 4 angeordnet. Die Leitungslänge zwischen dem Batteriepol 4a und dem Schalternetzwerk 6 ist möglich kurz zu wählen, vorzugsweise weniger als 50 cm. Das Schalterelement 20 ist dagegen in räumlicher Nähe zum Starter 18 und/oder Generator 12 angeordnet.

Die Schalterelemente 20-24 können als elektrische Schalter, beispielsweise als Relais oder Schütze als auch als Halbleiterschalter gebildet sein. Insbesondere können die Schalterelemente 20-24 aus Parallelschaltungen von Halbleiterschaltern gebildet sein.

Eine nicht dargestellte Steuerschaltung ist vorgesehen, um die Schaltzustände der Schalterelemente 20-24 zu beeinflussen, insbesondere diese zu öffnen und zu schließen und vorzugsweise mit einem im Fahrzeug vorhandenen Steuergerät zu kommunizieren.

Im Stillstand eines Fahrzeugs können die Schalterelemente 22 und 24 geöffnet sein. Dies bedeutet, dass der Batteriepluspol 4a elektrisch von den beiden Leitungen 8, 10 getrennt ist. Die beiden Leitungen 8, 10 sind spannungslos und Korrosion durch Kriechstromkorrosion wird auf diesen Leitungen 8, 10 und insbesondere den jeweiligen Kontaktstellen vermieden.

Wenn das Fahrzeug gestartet werden soll, kann zumindest das Schalterelement 24 geschlossen werden und der Starter 18 wird von der Batterie 4 mit elektrischer Leistung versorgt. Das Schalterelement 22 kann dabei ebenfalls geschlossen werden. Ein Spannungseinbruch für die Verbraucher 14 kann durch einen Stützkondensator 28 im Moment des Startens verringert werden. Es hat sich jedoch gezeigt, dass ein Stützkondensator 28 nur einen ersten Spannungseinbruch beim Startvorgang begrenzen kann.

In der Regel fällt die Batteriespannung ohne Strombegrenzung des Starterstroms jedoch mehrfach unter 9 Volt, so dass der Stützkondensator 28 nur bedingt hilft. Um das Begrenzen des Startstroms zu ermöglichen, ist nun das Schalterelement 20 vorgesehen. Im Moment des Startens ist dieses Schalterelement 20 geöffnet. Strom fließt nur über den reduzierten Querschnitt der Leitung 10 von der Batterie zum Starter 18. In der ersten Startphase sorgt der Stützkondensator 28 vorzugsweise zusätzlich zu der Strombegrenzung über die querschnittsverjüngte Starterleitung 10a für eine Spannungsstabilisierung der Verbraucher 14.Nach der ersten Startphase kann das Schalterelement 20 geschlossen werden. Strom fließt sowohl über die Leitung 10 als auch über die Leitung 8 von der Batterie 4 zum Starter 18.

Während des Betriebs kann ein Ladestrom vom Generator 12 zur Batterie 4 fließen. Durch das Schalterelement 20 ist es möglich, auch die Leitung 10 beim Ladevorgang zu nutzen und somit die Verlustleistung zu reduzieren. Darüber hinaus kann für einen Notbetrieb, falls eine der Leitungen 8 oder 10 beschädigt ist, über das Schalterelement 20 die jeweils defekte Leitung überbrückt werden.

Durch ein gepulstes Schalten der Schalterelemente 20-24 im Falle des Startens ist es auch möglich, den Widerstand zu variieren und somit den Starteinschaltstrom von der Batterie 4 zum Starter 18 weiter zu begrenzen.

Ein beispielhafter Betrieb der Schalter 20-24 ist in den Figuren 3a- 3d dargestellt.

Die Figuren 3a - 3d zeigen die Bordnetztopologie 2 gemäß der Figur 2 im Betrieb. Zu erkennen ist, dass die Schalterelemente 20 - 24 während des in Figur 3a dargestellten Ruhebetriebs des Fahrzeugs geöffnet sind. Die Schalterelemente 22, 24 trennen die Starter-Batterie-Leitung 10 als auch die Generator-Batterie-Leitung 8 von der Batterie 4. Die der Batterie 4 abgekehrten Elemente des Bordnetzes sind allesamt stromlos geschaltet. Kriechstromkorrosion ist somit unmöglich.

Wenn ein Nutzer das Fahrzeug starten will, dreht er für gewöhnlich den Zündschlüssel im Zündschloss um oder drückt einen Start-Stopp-Taster im Fahrzeug. In diesem Moment beginnt eine Vorstartphase, wie sie in Figur 3b dargestellt ist. In der Vorstartphase wird das Schalterelement 22 zumindest zeitweise geschlossen. Hier ist insbesondere ein gepulster Betrieb des Schalterelements 22 möglich. Durch eine geeignete Einstellung des zeitlich gemittelten Widerstandes des Schalterelements 22 ist es möglich, den Stromfluss zwischen der Batterie 4 und dem Stützkondensator 28 einzustellen. Insbesondere ist es, um den Stützkondensator 28 zu schonen sinnvoll, den Strom von der Batterie 4 zum Stützkondensator 28 rampenförmig zu gestalten. Andere Stromverläufe sind ebenfalls möglich. Insbesondere ist der Stromverlauf durch das vorzugsweise gepulste Schalterelement 22 derart anzupassen, dass der Stützkondensator 28 geladen wird. Der Ladestrom sollte jedoch so bemessen sein, dass der Stützkondensator 28 möglichst gering belastet ist. Eine Pulsweitenmodulation des Schaltens des Schalterelements 22 ist dabei vorteilhaft. Die in der Figur 3b gezeigte Vorstartphase dauert in der Regel einige hundert Millisekunden. Der Stützkondensator 28 ist nach der Vorstartphase vollständig geladen.

Danach erfolgt eine erste Startphase, wie sie in der Figur 3c dargestellt ist. In der Figur 3c ist zu erkennen, dass in der ersten Startphase die Schalterelemente 22 und 24 geschlossen sind, das Schalterelement 20 jedoch geöffnet ist. Durch die Querschnittsverjüngung im Teil 10a der Starter-Batterie-Leitung 10 kann nur ein begrenzter Strom von der Batterie 4 zum Starter 18 fließen. Der Widerstand auf der Starter-Batterie-Leitung 10 ist gegenüber einer herkömmlichen Starter-Batterie-Leitung erhöht. Insbesondere ist der Leitungsquerschnitt im Teil 10a auf ca. ein Drittel gegenüber einem herkömmlichen Leiterquerschnitt reduziert.

Wie in der Figur 3c zu erkennen ist, ist die Verbindung zwischen der Batterie 4 und dem Generator 12 geschlossen. Dies erfolgt aus dem Grunde, dass der Generator 12 bereits in der ersten Startphase einen Strom liefert. Insbesondere ist der Generator 12 mechanisch mit dem Starter 18 gekoppelt. Durch das Andrehen des Starters 18 in der ersten Startphase liefert der Generator 12 bereits Energie, die wiederum zum Starten genutzt werden kann. Darüber hinaus wird elektrische Energie von dem Stützkondensator 28 verwendet, um den Starter 18 mit Energie zu versorgen.

Nach der ersten Startphase, die zwischen 50 und 500 Millisekunden dauern kann, jedoch auch länger sein kann, erfolgt die zweite Startphase, die in der Figur 3d dargestellt ist. In der zweiten Startphase wird zusätzlich zu den Schalterelementen 22, 24 auch das Schalterelement 20 geschlossen. Die Starter-Batterie-Leitung 10 wird parallel mit der Generator-Batterie-Leitung 8 zwischen der Batterie 4 und dem Anschluss des Schalterelements 22 parallel geschaltet. Der Gesamtleitungswiderstand zwischen der Batterie 4 und dem Anschluss des Schalterelements 20 wird somit gegenüber dem Leitungswiderstand in der ersten Startphase, wie er in der Figur 3c gezeigt ist, verringert. Strom kann von der Batterie 4 sowohl über die querschnittsverjüngte Starter-Batterie-Leitung 10 als auch parallel über die Generator-Batterie-Leitung 8 fließen. Darüber hinaus kann unmittelbar vom Generator 12 über das Schalelement 20 ein Strom zu dem Starter 18 fließen.

Durch die Querschnittsverjüngung der Starter-Batterie-Leitung 10 im Teil 10a um ca. zwei Drittel ist es möglich, Gewicht einzusparen. Insbesondere ist das Mehrgewicht durch die Schalterelemente 20 - 24 weniger, als das durch die Querschnittsverjüngung erreichte Mindergewicht der Starter-Batterie-Leitung 10.

Die gezeigte Bordnetztopologie stellt darüber hinaus eine gewisse Redundanz für die Schalterelemente 22, 24 dar. Falls eines der Schalterelemente 22, 24 ausfällt, ist es noch möglich, das Fahrzeug im Notbetrieb zu betreiben, in dem das Schalterelement 20 geschlossen bleibt und das jeweils defekte Schalterelement 22 oder 24 überbrückt ist.

Mit Hilfe der Querschnittsreduktion ist es möglich, den Startstrom zu begrenzen und somit den Einbruch der Batteriespannung zu verringern oder zu vermeiden. Dies führt zu einem erhöhten Komfort im Bordnetz, insbesondere im Bereich der Verbraucher 7und oder Verbraucher 14.

Die Gesamtstromtragfähigkeit und Schaltleistung der jeweiligen Schalterelemente 20 - 24 kann gegenüber der Verwendung eines einzigen Schalters reduziert werden, da sich die Schaltleistung auf drei Schalterelemente verteilt.

Schließlich ist durch die dezentrale Verteilung der Schalterelemente 20 und 22, 24 eine bessere Wärmeableitung möglich. Die Verlustleistung im Schalterelement 20 wird räumlich an einer anderen Stelle erzeugt, als die Verlustleistung in den Schalterelementen 22, 24.

Darüber hinaus ist der Leitungswiderstand im Fahrbetrieb, wie er in der Figur 3d gezeigt ist, reduziert. Insbesondere zum Laden der Batterie 4 im Fahrbetrieb durch den Generator 12 steht neben dem Leitungsquerschnitt der Generator-Batterie-Leitung 8, die ohnehin vorhanden wäre, auch der des Teils 10a der Starter-Batterie-Leitung 10 zur Verfügung. Verlustleistung ist somit reduziert und die Batterie 4 kann besser geladen werden.

Die nicht dargestellte Steuerschaltung überwacht auch die Zustände der Schalterelemente 20-24. Fällt beispielsweise das Schalterelement 22 aus, so ist eine Überbrückung des Schalterelements 22 durch Schließen der Schalterelemente 20, 24 möglich. Andererseits ist es auch möglich, dass ein Ausfall des Schalterelements 14 durch Schließen der Schalterelemente 20, 22 überbrückt werden kann.

## Patentansprüche

1. Bordnetz für Kraftfahrzeug umfassend:
- einen Starter (18), - ein zwischen einer Generator-Batterie-Leitung (8) und einer Starter-Batterie-Leitung (10) des den Starter (18) aufweisenden Bordnetzes angeordnetes erstes Schalterelement (20), derart, dass die Generator-Batterie-Leitung (8) und die Starter-Batterie-Leitung (10) räumlich im Bereich des Starters (18) kurzschließbar sind, wobei
- die Starter-Batterie-Leitung (10) eine Querschnittsverjüngung aufweist, an welcher das erste Schalterelement (20) angeschlossen ist und
- die Querschnittsverjüngung derart ist, dass die Starter-Batterie-Leitung (10) zwischen dem ersten Schalterelement (20) und dem Starter (18) einen größeren Leiterquerquerschnitt hat als die Starter-Batterie-Leitung (10) zumindest in Teilen zwischen dem ersten Schalterelement (20) und einer Batterie (4).

2. Bordnetz nach Anspruch 1,
**dadurch gekennzeichnet,**
- **dass** eine Batterie (4) vorgesehen ist.

3. Bordnetz nach Anspruch 2, **dadurch gekennzeichnet, dass** das erste Schalterelement (20) derart an der Generator-Batterie-Leitung (8) angeschlossen ist, dass die Leitungslänge zwischen dem ersten Schalterelement (20) und dem Generator (14) geringer ist als zwischen dem ersten Schalterelement (20) und der Batterie (4) und/oder einem Ausgang eines Schalternetzwerks (6) und/oder das erste Schalterelement (20) derart an der Starter-Batterie-Leitung (10) angeschlossen ist, dass die Leitungslänge zwischen dem ersten Schalterelement (20) und dem Starter (18) geringer ist als zwischen dem ersten Schalterelement (20) und der Batterie (4) und/oder dem Ausgang des Schalternetzwerks (6).

4. Bordnetz nach einem der Ansprüche 2 bis 3, **dadurch gekennzeichnet, dass** elektrisch parallel zu dem ersten Schalterelement (20) ein Schalternetzwerk (6) zwischen dem ersten Schalterelement (20) und der Batterie (4) angeordnet ist, und/oder dass das Schalternetzwerk (6) ein zweites Schalterelement (22) in der Starter-Batterie-Leitung und ein drittes Schalterelement (24) in der Generator-Batterie-Leitung aufweist.

5. Bordnetz nach Anspruch 4, **dadurch gekennzeichnet, dass** das erste Schalterelement (20) an einer Querschnittsverjüngung der Starter-Batterie-Leitung (10) angeschlossen ist und/oder einem Ausgang eines Schalternetzwerks (6), und/oder dass die Querschnittsverjüngung zumindest eine Halbierung des Leiterquerschnitts bewirkt, insbesondere eine Verjüngung von 85mm² auf 25mm² des Leiterquerschnitts bewirkt.

6. Bordnetz nach der Ansprüche 4 oder 5, **dadurch gekennzeichnet, dass** das zweite und das dritte Schalterelement (22, 24) mit einem Batterie Pluspol (4a) im Wesentlichen kurzschließbar sind.

7. Bordnetz nach einem der Ansprüche 4 bis 6, **dadurch gekennzeichnet, dass** das Schalternetzwerk (6) in einem Gehäuse gekapselt ist, und/oder dass die Schalterelemente (22, 24) jeweils getrennt ansteuerbar sind, und/oder dass eine mehradrige Steuerleitung zum Schalten der Schalterelemente des Schalternetzwerks (6) in das Gehäuse geführt ist.

8. Bordnetz nach einem der Ansprüche 4 bis 7, **dadurch gekennzeichnet, dass** das Schalternetzwerk (6) in räumlicher Nähe zu einer Batterie angeordnet ist, insbesondere in einem Abstand von weniger als 50 cm, insbesondere dass eine Leitungslänge zwischen einem Batteriepol und dem Eingang weniger als 50 cm beträgt.

9. Bordnetz nach einem der Ansprüche 4 bis 8, **dadurch gekennzeichnet, dass** das Schalternetzwerk (6) in einer Batteriewanne oder einem Vorstromverteiler angeordnet ist, und/oder das Schalternetzwerk (6) in einer Polnische der Batterie angeordnet ist.

10. Bordnetz nach einem der Ansprüche 4 bis 9, **dadurch gekennzeichnet, dass** eine Steuerschaltung mit den Schalterelementen (20, 22, 24) verbunden ist und die Steuerschaltung abhängig von Fahrzeugzuständen die Schalterelemente schaltet, und/oder dass die Steuerschaltung bei Fahrzeugstillstand zumindest das zweite Schalterelement (24), vorzugsweise das zweite Schalterelement (24) und das dritte Schalterelement (22) öffnet, und/oder dass die Steuerschaltung bei einem Start, vorzugsweise Warmstart eines Verbrennungsmotors des Fahrzeugs für eine erste Startphase von weniger als 2 Sekunden, vorzugsweise weniger als 1 Sekunde, zunächst nur das zweite Schalterelement (24) und das dritte Schalterelement (22) schließt und nach Ablauf der ersten Startphase zusätzlich das erste Schalterelement (20) schließt.

11. Bordnetz nach der Anspruch 10, **dadurch gekennzeichnet, dass** die Steuerschaltung den Zustand der Schaltelemente (20, 22, 24) überwacht und bei einem Fehlerzustand eines Schaltelements (20, 22, 24) durch Schalten jeweils zumindest eines anderen Schaltelements (20, 22, 24) das fehlerhafte Schaltelement (20, 22, 24) elektrisch überbrückt.

12. Bordnetz nach einem der Ansprüche 4 bis 11, **dadurch gekennzeichnet, dass** die Generator-Batterie Leitung (8) mit einem ersten Teil elektrischer Verbraucher verbunden ist, und/oder dass die Batterie (4) parallel zu dem Schalternetzwerk (6) mit einem zweiten Teil elektrischer Verbraucher verbunden ist

13. Bordnetz nach einem der Ansprüche, **dadurch gekennzeichnet, dass** ein Schalterelement (20, 22, 24) zumindest einen elektronischen Schalter, insbesondere einen Halbleiterschalter, einen Transistorschalter, einem MOSFET Schalter, einen IGBT Schalter oder einen elektrischen Schalter, insbesondere ein Relais, oder einen antiseriellen Schalter aufweist.

14. Bordnetz nach einem der vorangehenden Ansprüche, **dadurch gekennzeichnet, dass** ein Schalterelement (20, 22, 24) aus einer Parallelschaltung von zumindest zwei getrennt schaltbaren Schaltern gebildet ist.

15. Bordnetz nach einem der vorangehenden Ansprüche, **dadurch gekennzeichnet, dass** ein Schalterelement (20, 22, 24) gepulst schaltbar ist.

16. Kraftfahrzeug mit einem Bordnetz nach Anspruch 1, **dadurch gekennzeichnet, dass** das erste Schalterelement (20) im Bereich eines Motorraums, vorzugsweise im oder am Motorraum eines Kraftfahrzeugs angeordnet ist.

## Claims

1. Vehicle electrical system comprising
- a starter (18)
- a first switch element (20) arranged between a generator-battery line (8) and a starter-battery line (10) of a vehicle electrical system comprising the starter (18), such that the generator-battery line (8) and the starter-battery line (12) can be short circuited spatially in the region of the starter (18), wherein
- the starter-battery line (10) has a narrowing of its cross section, to which the first switch element is connected and
- the narrowing of the cross section is such that the starter-battery line (10) has a greter cross section between the first switch element (20) and the starter than the starter-battery line (10) at least in parts between the first switch element (20) and a battery (4).

2. Vehicle electrical system according to Claim 1, **characterised in that** a battery (4) is comprised.

3. Vehicle electrical system according to Claim 2, **characterised in that** the first switch element (20) is connected to the generator-battery line (8) in such a way that the line length between the first switch element (20) and the generator (14) is less than between the first switch element (20) and the battery (4) and/or an output of a switch network (6) and/or that the first switch element (20) is connected to the starter-battery line (10) in such a way that the line length between the first switch element (20) and the starter (18) is less than between the first switch element (20) and the battery (4) and/or the output of the switch network (6).

4. Vehicle electrical system according to any one of claims 2 to 3, **characterised in that** a switch network (6) between the first switch element (20) and the battery (4) is arranged electrically in parallel to the first switch element (20) and/or that the switch network (6) has a second switch element (22) in the starter-battery line and a third switch element (24) in the generator-battery line.

5. Vehicle electrical system according to claim 4, **characterised in that** the first switch element (20) is connected to a narrowing of the cross section of starter-battery line (10) and/or an output of the switch network (6) and/or that the narrowing of the cross section results in at least halving the line cross section in particular a narrowing from 85mm² to 20mm² of the line cross section.

6. Vehicle electrical system according to claim 4 or 5, **characterised in that** the second and the third switch element (22, 24) are substantially able to be shortcircuited with a battery positive terminal.

7. Vehicle electrical system according to any one of the preceding claims, **characterised in that** the switch network (6) is encapsulated in a housing and/or the switch elements (22, 24) are each able to be controlled separately and/or that a multi-wired control line is guided into the housing to switch the switch elements of the switch network (6).

8. Vehicle electrical system according to any one of claims 4 to 7, **characterised in that** the switch network (6) is arranged in spatial proximity to a battery, in particular at a distance of less than 50cm, in particular that a line length between a battery terminal and the input amounts to less than 50cm.

9. Vehicle electrical system according to any one of claims 4 to 8, **characterised in that** the switch network is arranged in a battery tray or a current distributor and/or that the switch network (6) is arranged in a pole niche of the battery.

10. Vehicle electrical system according to any one of claims 4 to 9, **characterised in that** a control circuit is connected to the switch elements (20, 22, 24) and the control circuit switches the switch elements depending on vehicle states and/or that the control circuit opens at least the second switch element (24), preferably the second switch element (24) and the third switch element (22), in the case of vehicle standstill and/or that the control circuit initially only closes the second switch element (24) and the third switch element (24) during starting, preferably warm starting, of a combustion engine of the vehicle for a first start phase of less than 2 seconds, preferably less than 1 second, and additionally closes the first switch element (20) after expiry of the first start phase.

11. Vehicle electrical system according to claim 10, **characterised in that** the control circuit monitors the state of the switch elements (20, 22, 24) and, in the case of an error state of a switch element (20, 22, 24), bridges the faulty switch element (20, 22,24) electrically by switching at least one other respective switch elements (20, 22,24).

12. Vehicle electrical system according to any one of claims 4 to 11, **characterised in that** the generator-battery line (8) is connected to a first part of electrical loads and/or that the battery (4) is connected to a second part of electrical components in parallel to the switch network (6).

13. Vehicle electrical system according to any one of the claims, **characterised in that** a switch element (20, 22, 24) has at least one electronic switch, in particular a semi-conductor switch, a transistor switch, a MOSFET switch, an IGBT switch or an electrical switch, in particular a relay or an antiserial switch.

14. Vehicle electrical system according to any one of the preceding claims, **characterised in that** a switch element (20, 22, 24) is formed from a parallel connection of at least two switches which are able to be switched separately.

15. Vehicle electrical system according to any one of the preceding claims, **characterised in that** a switch element (20, 22, 24) is able to be switched in a pulsed manner.

16. Vehicle with a vehicle electrical system of claim 1, **characterized in that** the first switch element (20) in arranged in the area of the motor compartment, in particular within or at the motor compartment of a vehicle.

## Revendications

1. Réseau de bord pour un véhicule automobile, ledit réseau de bord comprenant :
- un démarreur (18), un premier élément de contacteur (20) disposé entre un conducteur (8) reliant la batterie à l'alternateur, et un conducteur (10) reliant la batterie au démarreur du réseau de bord présentant le démarreur (18), de manière telle que le conducteur (8) reliant la batterie à l'alternateur et le conducteur (10) reliant la batterie au démarreur puissent être court-circuités dans l'espace formé par la zone du démarreur (18),
où le conducteur (10) reliant la batterie au démarreur présente une diminution de la section, diminution au niveau de laquelle est connecté le premier élément de contacteur (20), et
où la diminution de la section est telle, que le conducteur (10) reliant la batterie au démarreur a, entre le premier élément de contacteur (20) et le démarreur (18), une section de conducteur supérieure à celle du conducteur (10) reliant la batterie au démarreur, au moins dans des parties comprises entre le premier élément de contacteur (20) et une batterie (4).

2. Réseau de bord selon la revendication 1, **caractérisé en ce qu'**il est prévu une batterie (4).

3. Réseau de bord selon la revendication 2, **caractérisé en ce que** le premier élément de contacteur (20) est connecté au conducteur (8) reliant la batterie à l'alternateur, de manière telle que la longueur de conducteur comprise entre le premier élément de contacteur (20) et l'alternateur (14) soit inférieure à la longueur de conducteur comprise entre le premier élément de contacteur (20) et la batterie (4) et/ou une sortie d'un réseau de contacteur (6), et/ou le premier élément de contacteur (20) est connecté au conducteur (10) reliant la batterie au démarreur, de manière telle que la longueur de conducteur comprise entre le premier élément de contacteur (20) et le démarreur (18) soit inférieure à la longueur de conducteur comprise entre le premier élément de contacteur (20) et la batterie (4) et/ou la sortie du réseau de contacteur (6).

4. Réseau de bord selon l'une des revendications 2 à 3, **caractérisé en ce qu'**un réseau de contacteur (6) est disposé entre le premier élément de contacteur (20) et la batterie (4) en étant électriquement parallèle au premier élément de contacteur (20), et/ou **en ce que** le réseau de contacteur (6) présente un deuxième élément de contacteur (22) placé dans le conducteur reliant la batterie au démarreur et un troisième élément de contacteur (24) placé dans le conducteur reliant la batterie à l'alternateur.

5. Réseau de bord selon la revendication 4, **caractérisé en ce que** le premier élément de contacteur (20) est connecté au niveau d'une diminution de la section du conducteur (10) reliant la batterie au démarreur et/ou au niveau d'une sortie d'un réseau de contacteur (6), et/ou **en ce que** la diminution de la section a pour effet au moins une division par deux de la section du conducteur, en particulier une diminution de la section du conducteur passant de 85 mm² à 25 mm².

6. Réseau de bord selon la revendication 4 ou 5, **caractérisé en ce que** le deuxième et le troisième élément de contacteur (22, 24) peuvent être court-circuités essentiellement avec un pôle positif (4a) d'une batterie.

7. Réseau de bord selon l'une quelconque des revendications 4 à 6, **caractérisé en ce que** le réseau de contacteur (6) est encapsulé dans un boîtier, et/ou **en ce que** les éléments de contacteur (22, 24) peuvent à chaque fois être commandés séparément, et/ou **en ce qu'**un conducteur de commande multifilaire servant à la commutation des éléments de contacteur du réseau de contacteur (6) est guidé dans le boîtier.

8. Réseau de bord selon l'une quelconque des revendications 4 à 7, **caractérisé en ce que** le réseau de contacteur (6) est disposé dans un espace situé à proximité d'une batterie, en particulier à une distance inférieure à 50 cm, en particulier **en ce qu'**une longueur de conducteur, comprise entre un pôle de batterie et l'entrée, est inférieure à 50 cm.

9. Réseau de bord selon l'une quelconque des revendications 4 à 8, **caractérisé en ce que** le réseau de contacteur (6) est disposé dans un bac à batterie ou dans un répartiteur de courant de polarisation, et/ou **en ce que** le réseau de contacteur (6) est disposé dans un renfoncement prévu pour les bornes de la batterie.

10. Réseau de bord selon l'une quelconque des revendications 4 à 9, **caractérisé en ce qu'**un circuit de commande est relié aux éléments de contacteur (20, 22, 24), et le circuit de commande commute les éléments de contacteur en fonction d'états du véhicule, et/ou **en ce que** le circuit de commande, en cas d'arrêt du véhicule, ouvre au moins le deuxième élément de contacteur (24), de préférence le deuxième élément de contacteur (24) et le troisième élément de contacteur (22), et/ou **en ce que** le circuit de commande, dans le cas d'un démarrage, de préférence d'un démarrage à chaud d'un moteur à combustion interne du véhicule, pour une première phase de démarrage inférieure à 2 secondes, de préférence inférieure à 1 seconde, ferme d'abord seulement le deuxième élément de contacteur (24) et le troisième élément de contacteur (22) et, une fois que la première phase de démarrage est terminée, ferme en outre le premier élément de contacteur (20).

11. Réseau de bord selon la revendication 10, **caractérisé en ce que** le circuit de commande surveille l'état des éléments de contacteur (20, 22, 24) et, dans le cas d'un état défectueux d'un élément de contacteur (20, 22, 24), ledit circuit de commande court-circuite électriquement l'élément de contacteur défectueux (20, 22, 24), par commutation à chaque fois d'au moins un autre élément de contacteur (20, 22, 24).

12. Réseau de bord selon l'une quelconque des revendications 4 à 11, **caractérisé en ce que** le conducteur (8) reliant la batterie à l'alternateur est relié à une première partie de récepteurs électriques, et/ou **en ce que** la batterie (4), disposée parallèlement au réseau de commutateur (6), est reliée à une deuxième partie de récepteurs électriques.

13. Réseau de bord selon l'une quelconque des revendications précédentes, **caractérisé en ce qu'**un élément de contacteur (20, 22, 24) présente au moins un contacteur électronique, en particulier un contacteur à semi-conducteurs, un contacteur à transistors, un contacteur MOSFET, un contacteur IGBT ou un contacteur électrique, en particulier un relais, ou bien un contacteur à montage anti-série.

14. Réseau de bord selon l'une quelconque des revendications précédentes, **caractérisé en ce qu'**un élément de contacteur (20, 22, 24) est formé à partir d'un circuit parallèle d'au moins deux contacteurs pouvant être commutés séparément.

15. Réseau de bord selon l'une quelconque des revendications précédentes, **caractérisé en ce qu'**un élément de contacteur (20, 22, 24) peut être commuté de manière pulsée.

16. Véhicule automobile comprenant un réseau de bord selon la revendication 1, **caractérisé en ce que** le premier élément de contacteur (20) est disposé dans la zone d'un compartiment moteur, de préférence disposé dans ou sur le compartiment moteur d'un véhicule automobile.
